# FASCICULE DE BREVET EUROPEEN

(11) **EP 4 272 998 B1**
(45) Date de publication et mention de la délivrance du brevet: **12.02.2025**
(21) Numéro de dépôt: 23167817.8
(22) Date de dépôt: 13.04.2023
(51) Int. Cl.: B60N 2/02, B60N 2/16, B60N 2/18

(54) **DISPOSITIF D'ENTRAINEMENT MOTORISE POUR REHAUSSE DE SIEGE DE VEHICULE**
MOTORISCHER ANTRIEB FÜR EINEN HÖHENVERSTELLBAREN FAHRZEUGSITZ
MOTORISED DRIVE DEVICE FOR HIGHT ADJUSTABLE VEHICLE SEAT

(30) Priorité: 28.04.2022 FR 2203990
(43) Date de publication de la demande: 08.11.2023
(73) Titulaire: FAURECIA Sièges d'Automobile, 92000 Nanterre (FR)
(72) Inventeur: RDZANEK, Emil, Piaseczno (PL); NAVATTE, Nicolas, 14110 Condé sur Noireau (FR); LIANG, Niles, Wuxi 214028 (CN)
(74) Mandataire: Plasseraud IP

(56) Documents cités:
- DE-U1- 202017 106 652
- FR-A1- 2 991 926
- FR-A1- 3 086 597

## Description

La présente invention est relative aux dispositifs d'entrainement motorisés pour siège de véhicule, ledit siège ayant une armature d'assise agencée sur une embase, l'assise étant équipée d'un mouvement de rehausse d'assise.

Dans ce type de configuration, il est prévu un actionneur avec un organe de sortie entraîné sélectivement en rotation pour faire monter et/ou descendre l'armature d'assise. L'organe de sortie, ou pignon de sortie, comprend une denture engagée avec un secteur denté en vis-à-vis. Le secteur denté est en liaison avec la cinématique de montée et descente de l'assise. FR3086597 montre un exemple d'un dispositif d'entrainement motorisé du type concerné.

Le dispositif d'entraînement motorisé comprend un réducteur à fort taux de réduction pour passer d'une rotation rapide du moteur électrique à une rotation lente voire très lente du pignon de sortie. Le réducteur en question présente un jeu fonctionnel nécessaire à son fonctionnement en toutes circonstances. Ce jeu est présent notamment lorsque le moteur électrique n'est pas commandé et que le pignon de sortie n'est pas censé bouger.

Par ailleurs, le mouvement de rehausse d'assise est habituellement muni d'un système de rappel élastique vers le haut afin de compenser tout ou partie du poids de l'occupant assis sur le siège, et accessoirement d'une partie du poids du siège lui-même.

Le jeu du réducteur peut être perceptible notamment dans les situations de changement de polarité du chargement, par exemple lorsqu'un occupant s'assoit sur l'assise ou lorsqu'un occupant quitte l'assise.

C'est pourquoi les inventeurs ont cherché à masquer la présence du jeu fonctionnel du réducteur.

A cet effet, il est proposé ici un dispositif d'entrainement motorisé pour siège de véhicule ayant une armature d'assise, le dispositif d'entraînement étant destiné à entraîner le déplacement d'un élément mobile relié à l'armature d'assise, notamment pour un mouvement de rehausse d'assise, le dispositif comprenant :
- un actionneur et un boîtier d'actionneur contenant au moins un réducteur,
- un organe de sortie, monté à rotation autour d'un axe, l'organe de sortie comprenant une jante périphérique,
- une bague de friction montée autour de l'organe de sortie et solidaire en rotation de l'organe de sortie, la bague de friction comprenant une jupe,
- le boîtier d'actionneur comprenant un palier intérieur pour recevoir la jupe,
- la jupe étant en contact avec au moins le palier intérieur pour former un frein à friction entre l'organe de sortie formant pièce tournante et le palier intérieur formant pièce fixe.

Grâce à ces dispositions, le contact entre la jupe et le palier intérieur du boîtier est un contact linéaire ou un contact surfacique, cette zone de contact génère une friction qui s'exerce comme un frein dès lors qu'un couple de rotation est appliqué sur le pignon de sortie.

Le contact de la jupe qui porte sur le palier intérieur fixe produit un effet de freinage, quelle que soit la position angulaire du pignon de sortie. Ceci permet de repousser la limite de couple appliqué au pignon de sortie pour lequel le jeu fonctionnel se manifeste. Autrement dit, il faut appliquer un couple supérieur à un seuil prédéterminé sur le pignon de sortie, pour que le pignon tourne et que le jeu soit rattrapé. En deçà du seuil prédéterminé, le pignon ne tourne pas du tout et le jeu fonctionnel du réducteur est par conséquent masqué. Avantageusement, ledit seuil prédéterminé est plus élevé que dans les réalisations connues.

On remarque que le palier intérieur n'est pas forcément circulaire ou cylindrique comme il sera vu plus loin.

Selon une possibilité, le palier intérieur peut présenter une surface discontinue et/ou avec des saillies, en vis-à-vis d'une surface de jupe lisse.

Selon une autre possibilité, le palier intérieur peut présenter une surface continue vis-à-vis d'une surface de jupe avec des saillies radiales.

Dans divers modes de réalisation de l'invention, on peut éventuellement avoir recours en outre à l'une et/ou à l'autre des dispositions suivantes.

Selon un autre aspect, la jupe est généralement circulaire de révolution au repos et est ovalisée sous contrainte une fois assemblée à l'intérieur du palier intérieur; moyennant quoi, la déformation ovale et/ou elliptique permet de créer un couple de freinage tout en minimisant l'usure de la jupe au long du cycle de vie.

Selon un aspect, la jupe peut comporter des saillies radiales vers l'extérieur, qui dépassent de la forme générale de révolution, les saillies radiales provoquant, une fois la jupe insérée dans le palier, une ovalisation de la jupe. Dans ce cas, le palier peut être lisse et cylindrique sans interruption, sans saillie ou creux.

Selon un aspect, le palier intérieur peut être muni d'une pluralité de projections radiales intérieures faisant saillie radialement vers l'intérieur; ainsi la jupe, généralement circulaire de révolution au repos, est ovalisée sous contrainte une fois assemblée à l'intérieur du palier intérieur par les projections radiales intérieures. Moyennant quoi ces projections radiales contribuent à créer une contrainte de déformation dans la jupe de la bague à friction, la déformation élastique créant la ou les zones de contact recherchées. La jupe porte et frotte notamment contre les projections radiales intérieures.

Selon un autre aspect, le palier intérieur peut comprendre une ou plusieurs portions de palier cylindriques de révolution et les projections radiales intérieures font saillie radialement vers l'intérieur par rapport à ces portions cylindriques. Les projections radiales forment des bourrelets à partir d'une forme générale cylindrique. On peut ainsi bien maîtriser la géométrie de la déformation elliptique de la jupe.

Selon un autre aspect, la jupe peut porter et frotter en outre à certains endroits contre les portions cylindriques du palier intérieur du boîtier d'actionneur. Par conséquent, le contact et le frottement de la jupe se produisent non seulement sur les projections radiales intérieures mais aussi sur les portions cylindriques ; on accroît ainsi la surface de contact.

Selon un autre aspect, il peut être prévu un premier groupe de projections radiales intérieures et un deuxième groupe de projections radiales intérieures, les deux groupes étant diamétralement opposés; l'effet d'ovalisation est ainsi bien maîtrisé. Le petit axe de l'ellipse est imposé par les projections radiales intérieures et le grand axe de l'ellipse est orthogonal au petit axe et les extrémités de la jupe coté grand axe viennent se caler contre les portions de palier cylindriques.

Selon un autre aspect, la bague de friction est formée comme une seule pièce moulée en matière plastique élastique ; la solution proposée est ainsi particulièrement avantageuse du point de vue économique.

Selon un autre aspect, la jupe présente un diamètre extérieur D5 au repos d'au moins 35 mm, et de préférence au moins 40 millimètres. On travaille ainsi sur un rayon plus grand que dans les configurations de bagues connues. Le bras de levier pour créer un couple de freinage est plus grand.

Selon un autre aspect, la jupe prend appui en outre, du côté radialement intérieur, sur la jante périphérique de l'organe de sortie. La jupe est prise en sandwich entre le palier intérieur du boîtier et la jante périphérique. Ceci permet d'accroitre la friction et l'effet de freinage.

Selon un autre aspect complémentaire, il est prévu des godrons ou des nervures dirigés vers l'intérieur pour venir contacter la jante périphérique. On rend ainsi plus fiable l'appui sur la jante périphérique en maîtrisant la somme des surfaces d'appui. On a ainsi une bonne maîtrise de l'effet sandwich.

Selon un autre aspect, les godrons ou les nervures sont régulièrement répartis autour de la circonférence. La bague et la jupe tournent solidairement avec l'organe de sortie, et avantageusement, le couple de freinage est assez constant sur les 360° de rotation de l'organe de sortie.

Selon un autre aspect, le boîtier d'actionneur comprend un carter en plastique ou en alliage léger et un couvercle métallique et le palier intérieur, avec le cas échéant les projections radiales intérieures, est réalisé dans le carter. Les projections sont issues de moulage. Ceci conduit à un bon rapport prestation sur coût.

Selon un aspect alternatif au précédent, le palier intérieur, avec le cas échéant les projections radiales intérieures, peut être réalisé dans le couvercle métallique. Ceci procure une bonne durabilité du palier intérieur.

Selon un autre aspect, la bague de friction comprend un col de forme intérieure généralement complémentaire avec une denture du pignon de sortie. Ceci permet un entraînement robuste en rotation de la bague de friction, de préférence sans jeu.

Selon un autre aspect, le col sert au centrage de l'organe de sortie sur l'axe par coopération avec un alésage axial (18) du couvercle. On garantit ainsi le centrage de l'organe de sortie sur l'axe A1 défini par l'alésage du couvercle.

Selon un autre aspect, le col comprend des évidements intérieurs pour recevoir les dents du pignon et, côté radialement extérieur, une portée cylindrique reçue dans l'alésage axial du couvercle. Le col est de forme ad-hoc pour l'entrainement en rotation et le centrage géométrique sur l'axe.

Selon un autre aspect, la bague de friction comprend un plateau ajouré. Ceci facilite la déformation et l'ovalisation de la jupe.

Selon un autre aspect, le couple de freinage induit par le contact est au moins égal à 3 N.m. On repousse la limite de perception du jeu du réducteur en cas de changement de polarité de chargement.

Selon un autre aspect, le réducteur est de type hypocycloïde à joint de oldham. Ce type de réducteur est compact et fournit un taux de réduction important.

Selon un autre aspect, les projections radiales intérieures circonscrivent un premier cercle primitif C1, et la jupe au repos est circonscrite dans un deuxième cercle primitif C2, le diamètre de C2 étant supérieur au diamètre de C1. Le montage induit une précontrainte qui résulte dans l'ovalisation de la jupe et le contact contre le palier intérieur donne l'effet souhaité du frein à friction.

Selon un autre mode de réalisation, la jupe comprend une succession de segments formant sensiblement des cordes, les dits segments adjacents deux à deux étant reliés entre eux par des jonctions coudées, le sommet des jonctions coudées étant en contact avec le palier intérieur.

Autrement dit, dans ce cas de figure, en section transversale à l'axe, la jupe présente généralement une forme polygonale.

Selon un autre mode de réalisation, la jupe comprend des vagues ou ondulations, qui au repos ont une dimension radiale supérieure à un intervalle radial (E1) entre la jante périphérique et le palier intérieur, lesdites vagues ou ondulations étant comprimées dans le sens radial une fois la jupe insérée entre la jante périphérique et le palier intérieur. Ceci procure un contact avec précontrainte radiale ayant pour effet le freinage à friction recherché.

L'invention vise également un siège de véhicule comportant un ou plusieurs dispositifs d'entraînement motorisés tel que décrit ci-dessus.

D'autres aspects, buts et avantages de l'invention apparaîtront à la lecture de la description suivante d'un de ses modes de réalisation, donné à titre d'exemple non limitatif à l'aide des dessins joints sur lesquels :
- la figure 1 est une vue schématique de côté d'une structure de siège comprenant un dispositif d'entrainement selon un mode de réalisation de l'invention,
- la figure 2 montre en perspective un exemple de dispositif d'entrainement pour le mouvement de rehausse de l'assise de siège de la Figure 1,
- la figure 3 est une vue éclatée en perspective du dispositif d'entraînement de la Figure 2, vu depuis un premier coté,
- la figure 4 illustre un exemple de réalisation de la bague de friction,
- la figure 4A représente le profil de la bague de friction,
- la figure 5 montre en vue partielle une coupe transversale à l'axe du dispositif d'entrainement, la jupe de la bague frottant sur le palier intérieur,
- la figure 6 montre, en vue de coupe axiale, certains éléments du dispositif d'entrainement, notamment l'organe de sortie, le carter et la bague de friction,
- la figure 7 montre en vue de coupe transversale partielle, selon la ligne de coupe VII-VII sur la figure 6, la jupe de la bague étant en contact frottant sur le palier intérieur, selon un autre mode de réalisation,
- la figure 8 est analogue à la figure 5 et montre en vue de coupe transversale, selon une variante de réalisation,
- la figure 9 montre, en vue de coupe axiale, certains éléments du dispositif d'entrainement, notamment l'organe de sortie, le carter et la bague de friction, selon encore un autre mode de réalisation,
- les figures 10A et 10B illustrent en perspective, respectivement depuis chaque côté, la bague de friction utilisée dans le montage de la figure 9,
- la figure 11 montre en vue de coupe transversale partielle, la jupe de la bague frottant sur le palier intérieur, selon encore un autre mode de réalisation,
- la figure 12 illustre en perspective, depuis le côté de la jupe, la bague de friction utilisée dans le montage de la figure 11,
- la figure 13 illustre en perspective depuis le côté de la jupe, la bague de friction selon un autre mode de réalisation,
- la figure 14 montre en vue de coupe axiale partielle, selon encore un autre mode de réalisation dans lequel le palier intérieur est formé dans le couvercle du boîtier.

Sur les différentes figures, les mêmes références désignent des éléments identiques ou similaires.

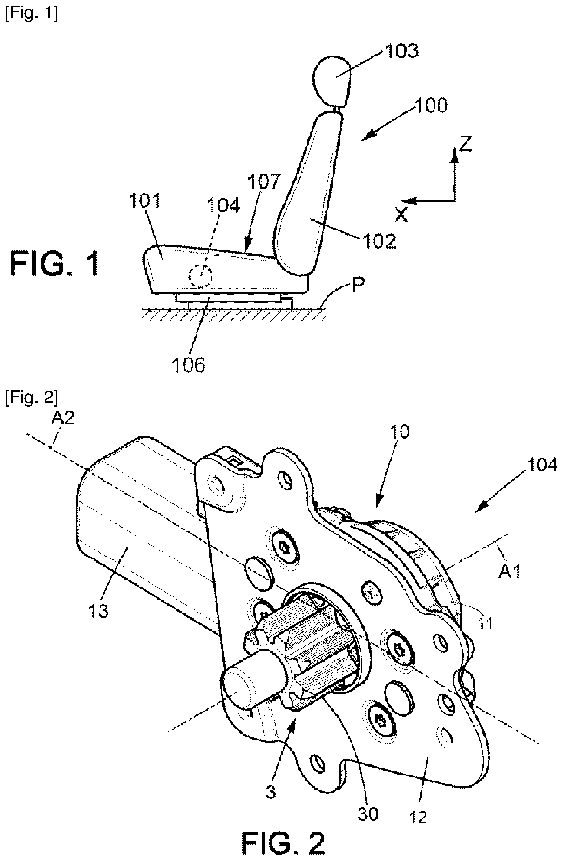

La figure 1 représente schématiquement un siège de véhicule 100 comprenant une assise 107 avec une armature d'assise 101, un dossier 102 monté sur l'assise, un appuie-tête 103, le tout étant monté sur une embase à glissières longitudinales 106, reliées au plancher P du véhicule.

Comme connu en soi, le siège peut être équipé d'un ou plusieurs mécanismes d'articulation pour se conformer à la morphologie et aux préférences de l'occupant.

Ce ou ces mécanismes d'articulation peuvent comprendre en particulier un mécanisme de rehausse de l'assise **107.**

La cinématique de rehausse de l'assise est connue en soi, et donc non décrite en détail ici. Le lecteur pourra se reporter au document FR2991926. La cinématique de rehausse peut faire appel à une ou plusieurs bielles de liaison reliant l'embase à l'armature d'assise. La rehausse peut être globale ou bien la rehausse peut être sélective, à savoir le mouvement de rehausse antérieure indépendant du mouvement de rehausse postérieure.

Au moins une des bielles de liaison peut comprendre un secteur denté qui se trouve en engagement mécanique avec un dispositif d'entrainement motorisé **104** qui est l'objet principal de la présente divulgation.

On note au passage qu'un siège peut contenir un seul dispositif d'entrainement motorisé **104** du type décrit ci-après, mais le siège peut contenir deux dispositifs d'entrainement motorisé, voire plus de deux.

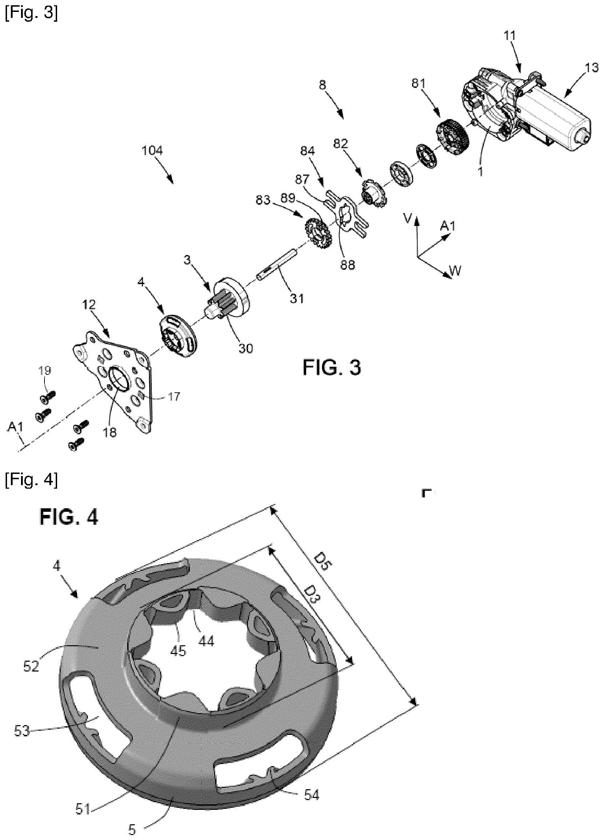

En référence aux figures 2 et 3, le dispositif d'entraînement motorisé **104** comprend un moteur **13,** un boîtier d'actionneur **10,** avec un carter **11** et un couvercle **12,** et un organe de sortie **3.**

Le boîtier d'actionneur **10** comprend un réducteur qui sera décrit plus loin, le boîtier d'actionneur est aussi appelé boîtier de réducteur.

Le carter **11** est formé comme une cloche. Dans l'exemple illustré, le carter **11** est formé en matière plastique. On peut utiliser comme matière plastique de l'ABS, du polypropylène, du polyéthylène, du polyamide etc. Toutefois le carter pourrait aussi être formé en alliage d'aluminium, en magnésium ou en tout alliage métallique léger.

Le boîtier d'actionneur comprend un palier intérieur **1** dont l'utilité sera précisée plus loin.

Le moteur **13** s'étend selon l'axe **A2** et comprend un rotor qui porte en bout une vis à denture hélicoïdale centrée sur l'axe **A2.** La vis à denture hélicoïdale est engagée sur une roue d'entrée du réducteur **81.** Le réducteur 8 est décrit plus en détail plus bas.

Le couvercle **12** ferme le carter plastique **11.** Le couvercle 12 est formé comme un flasque métallique. Le couvercle permet une fixation solide et robuste du dispositif d'entraînement motorisé à un élément d'armature de siège (embarqué sur l'assise ou non).

L'organe de sortie **3** comprend un pignon à denture **30.** Cette denture vient en engagement contraint dans un secteur denté situé en vis-à-vis dans une des bielles de liaison, comme par exemple décrit dans le document FR2991926.

L'organe de sortie **3** comprend une jante périphérique **2.** La jante périphérique **2** présente un diamètre **D2.**

Dans l'exemple illustré à la figure 3, il est prévu un arbre d'axe repéré 31 centré sur l'axe A1 et sur lequel tourne le pignon de sortie 3.

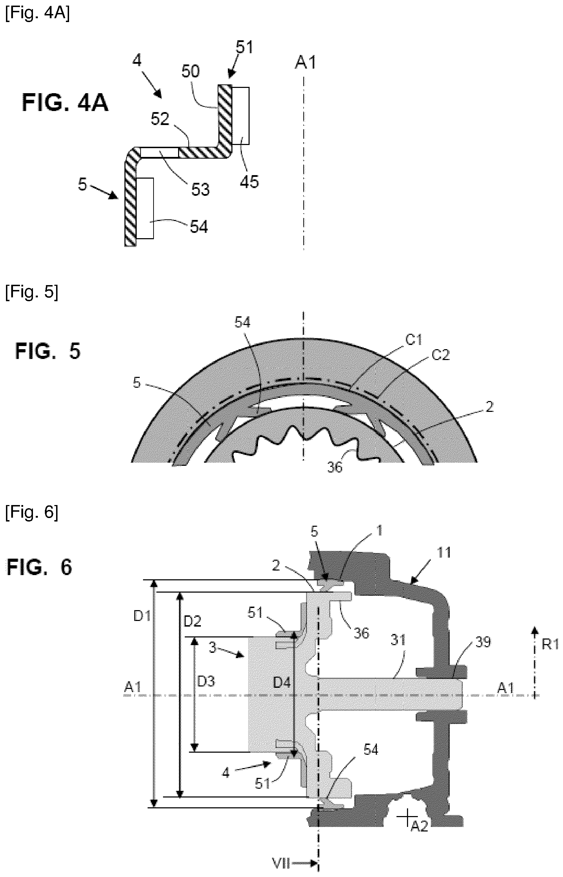

Dans les coupes représentées aux figures 6,9,14, il est illustré un autre mode de réalisation où l'organe de sortie 3 est formé intégralement avec son arbre d'axe 31. Les deux variantes sont donc possibles indépendamment des variantes décrites sur la bague de friction 4. Du coté du fond du carter, l'arbre d'est reçu dans un palier axial **39,** visible aux figures 6, 9 et 14.

L'organe de sortie **3** comprend une denture radialement intérieure **36,** et la jante périphérique **2** comprend une surface extérieure généralement cylindrique agencée au moins en partie à la même position axiale que la denture radialement intérieure.

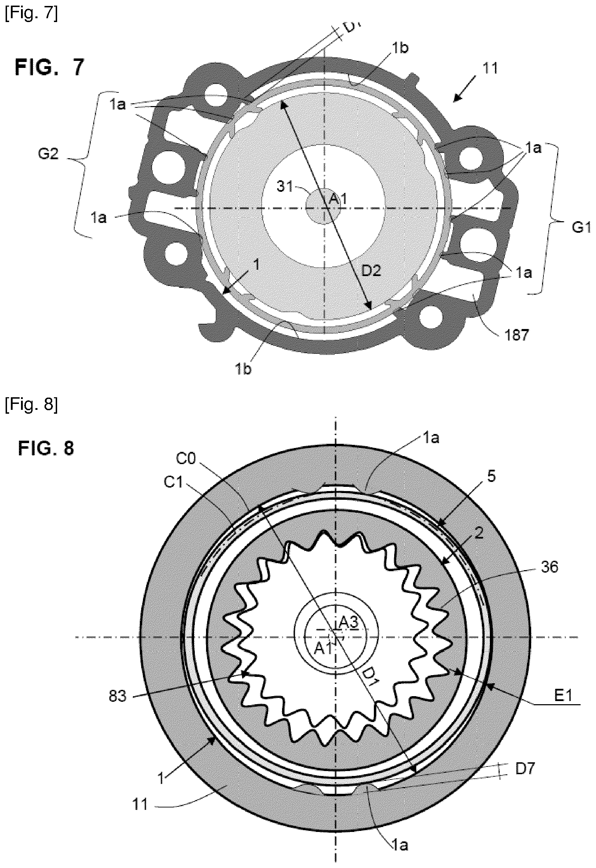

Il reste un intervalle radial **E1** entre la jante périphérique **2** et le palier intérieur **1,** comme visible à la figure 8.

Le palier intérieur **1** peut comprendre une ou plusieurs portions cylindriques **1b** coïncidentes avec un diamètre **D1** et le cercle primitif **C1.** Ces portions cylindriques peuvent être au nombre de deux, diamétralement opposées.

Dans un exemple simple, visible à la figure 5, le palier forme un cylindre continu, par exemple sur une plage angulaire de 360°, ou discontinu sur des secteurs angulaires disjoints.

La précontrainte de contact résulte de l'insertion en force avec déformation élastique de la jupe de diamètre au repos **D5** (cercle **C2)** que l'on vient insérer dans le diamètre repos **D1** (cercle **C1).**

Le diamètre extérieur **D5** de la jupe 5, au repos, est d'au moins 35 mm. De préférence, on choisit pour D5 une valeur voisine de 40 mm ou supérieure à 40 millimètres. On peut aussi choisir D5 voisin de 45 mm.

Selon un autre exemple illustré notamment à la figure 7, il est prévu des interruptions, notamment pour des raisons de démoulage de la pièce plastique.

Selon une option avantageuse, le palier intérieur 1 est muni d'une pluralité de projections radiales intérieures **1a** faisant saillie radialement vers l'intérieur, à partir du palier intérieur. Les projections radiales intérieures sont appelées bossages ou bourrelets. Le palier intérieur peut être défini en référence à un cylindre de diamètre **D1.** Les projections radiales intérieures font saillie radialement vers l'intérieur d'un dépassement d'une distance **D7** qui peut aller de 0,1 mm à quelques dixièmes de millimètres voire jusqu' à 3mm.

On remarque que le cercle primitif **C0** qui coïncide à la forme cylindrique générale du palier intérieur est plus grand que le cercle primitif **C1** circonscrit à l'intérieur des projections radiales (cf Fig 8).

Dans l'exemple illustré à la figure 7, il est prévu un premier groupe **G1** de projections radiales intérieures et un deuxième groupe **G2** de projections radiales intérieures, les deux groupes **G1,G2** étant diamétralement opposés.

### Bague de friction

Le dispositif d'entraînement motorisé **104** comprend une bague de friction 4. Les paragraphes suivants concernent en général la bague de friction et s'appliquent, sauf mention contraire, à tous les modes de réalisation et toutes les variantes.

La bague de friction **4** est formée comme une seule pièce moulée en matière plastique élastique. S'agissant de la matière, on pourra choisir de préférence un polyamide, un polypropylène, un polyoxyméthylène à haute résistance au fluage. Toute autre matière plastique résistante au fluage et à l'abrasion pourrait également convenir.

La bague de friction **4** comprend un col **51,** un plateau **52** et une jupe **5.** La jupe **5** de la bague d'interface est interposée, selon une direction radiale **R1,** entre la palier intérieur **1** et la jante périphérique **2** de l'organe de sortie, comme ceci est visible aux figures 5 à 9,11, 14.

Le plateau **52** s'étend perpendiculairement à l'axe **A1.** Le plateau **52** est interposé entre le col **51** et la jupe 5. Sur le plateau, il peut être prévu un ou plusieurs évidements 53 pour faciliter la déformation et l'ovalisation de la jupe.

La bague de friction **4** est montée autour de l'organe de sortie 3, et elle est solidaire en rotation de l'organe de sortie. Dans l'exemple illustré, le col **51** comprend vers l'intérieur des zones de creux **44** et des bosses **45** formant un profil complémentaire de la denture **30** du pignon de sortie **3.** Dans l'exemple illustré, le col **51** comprend vers l'extérieur une portée cylindrique **50** lisse, de diamètre **D4.** Le col **51** est reçu dans l'alésage axial **18** du couvercle.

Généralement, la **jupe 5** vient au contact au moins contre le palier intérieur **1.** Ceci génère un effet de frein à friction entre l'organe de sortie formant pièce tournante et le palier intérieur **1** formant pièce fixe. De préférence, cette friction existe quelque soit la position angulaire de l'organe de sortie par rapport au boîtier de réducteur ; autrement dit on a un effet de friction continue, de façon relativement constante sur un tour de l'organe de sortie 3.

Dans un premier mode de réalisation illustrée aux figures 3 à 7, la jupe vient frotter contre les projections radiales intérieures **1a** lorsque le palier intérieur en est équipé. Il est prévu quatre ajours **53.**

On remarque que la jupe est généralement circulaire de révolution au repos. Elle présente un diamètre extérieur au repos noté **D5,** représenté par le cercle C2 sur la figure 5.

Lorsque le palier 1 est muni de projections radiales intérieures, après assemblage, comme ceci est visible sur la figure 8, la jupe de friction est ovalisée sous contrainte à l'intérieur du palier intérieur par les projections radiales intérieures **1a.**

Dans le cas de la présence des projections radiales intérieures **1a,** le petit axe de l'ellipse est contraint par la distance disponible entre les projections diamétralement opposées et concernant le grand axe de l'ellipse, le frottement de la jupe se produit directement sur les portions cylindriques **1b** du palier intérieur. La surface totale de contact peut être assez importante, en plage angulaire cela peut représenter quelques dizaines de degrés.

Le pignon de sortie **30** présente un diamètre **D3** plus petit que celui D2 de la jante périphérique 2.

Dans un exemple de réalisation, **D2** > 1,4 **D3.** Dans un autre exemple de réalisation, D2 > 1,7 D3. Dans un autre exemple de réalisation, D2 > 2 x D3.

Au vu des dimensions de D2, on remarque que le contact de frottement de la jupe 5 travaille avec un bras de levier important par rapport à l'axe A1.

Le diamètre du cercle primitif du palier est repéré **D1. D1** est au moins 35 mm, de préférence au moins égal à 40 mm.

**D1** = **D2** + **E1,** où **E1** prend une valeur comprise entre 1 mm et 4 mm, comme visible sur la figure 8.

### Figures 9, 10A et 10B

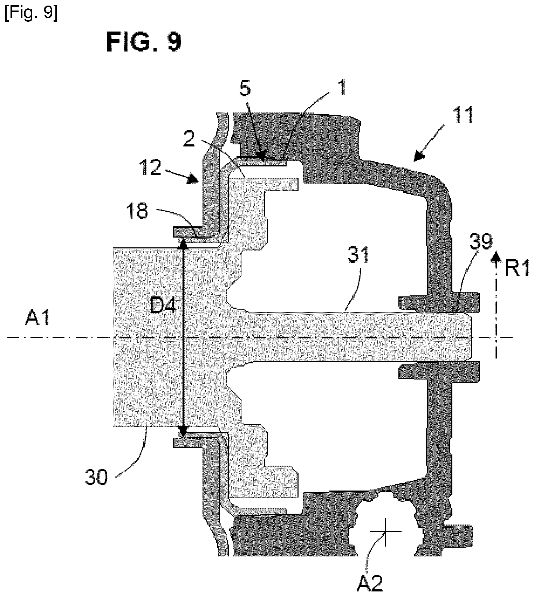

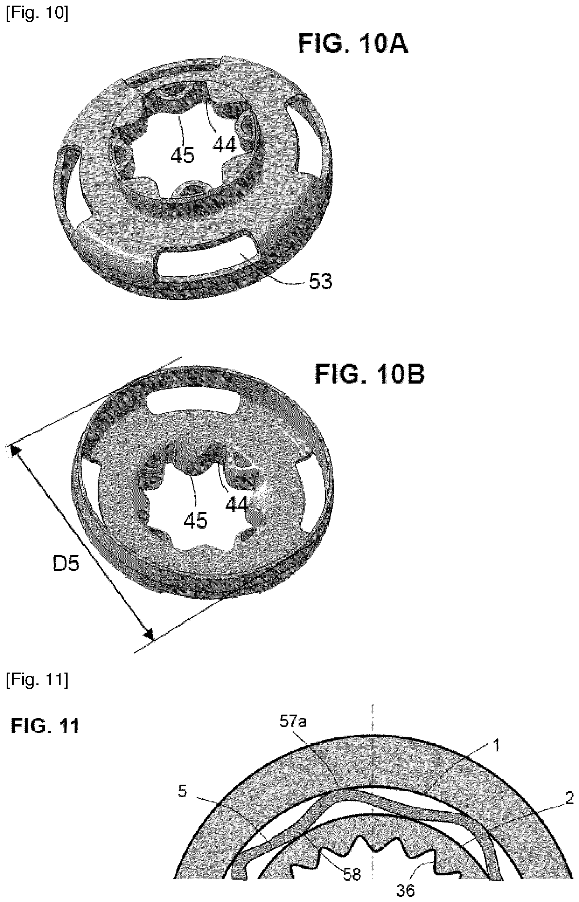

En référence aux figures 9, 10A 10B, dans un deuxième mode de réalisation de la bague de friction, la jupe 5 au repos présente une paroi cylindrique de révolution sans nervures dirigées vers l'intérieur ni vers l'extérieur.

Lorsque les projections radiales intérieures du palier intérieur sont présentes, on retrouve l'effet d'ovalisation comme représenté à la figure 8.

D'une façon générale, les projections radiales intérieures circonscrivent un premier cercle primitif C1. La jupe au repos est circonscrite dans un deuxième cercle primitif C2. Le diamètre de C2 est supérieur au diamètre de C1. Par exemple C2 est compris entre C1 et 1,10 x C1.

On note que l'insertion de la jupe dans le palier intérieur se fait avec une contrainte, qui résulte dans la configuration assemblée en une précontrainte résiduelle permanente laquelle est propice à l'effet de frein à friction exposé plus haut.

### Figures 11 et 12

Dans ce troisième mode de réalisation, la jupe présente une forme générale polygonale selon une section transversale à l'axe. Le long de la circonférence de la jupe, se trouvent des segments **56** sensiblement rectilignes formant corde, et des jonctions arrondies et des coudes **57.** La forme polygonale peut être décagonale, dodécagonale, ou contenir encore plus de segments.

Le contact contre le palier intérieur du boîtier se produit dans la zone des sommets **57a** des portions de jonction. Il peut être prévu en outre selon la géométrie que les segments formant corde contact également la jante périphérique dans une zone **58** à mi-chemin entre les sommets 57a.

On remarque, comme illustré aux figures, que les segments formant corde **56** peuvent avoir une courbure inversée par rapport à l'axe.

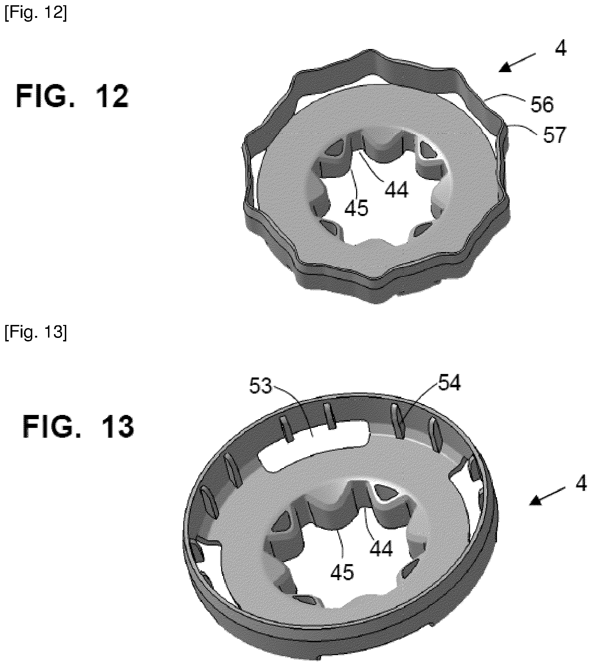

Dans une variante de réalisation similaire et généralisée par rapport à celle représentée sur la figure 12, la jupe **5** comprend des vagues ou ondulations, qui au repos ont une dimension radiale supérieure à l'intervalle radial **E1** entre la jante périphérique et le palier intérieur. Le palier intérieur **1** peut être ici cylindrique et lisse, i.e. sans les projections radiales intérieures discutées plus haut.

Ici on entend par dimension radiale de la jupe la différence entre le rayon maximum occupé et le rayon minimum occupé, ceci pris par rapport à l'axe.

Une fois la jupe insérée entre la jante périphérique et le palier intérieur 1, lesdites vagues ou ondulations sont comprimées dans le sens radial et fournissent le contact avec précontrainte radiale pour obtenir l'effet de frein.

### Figure 13.

Sur la figure 13, une autre variante de bague de friction 5 a été représentée. Il est prévu dans cette bague une pluralité de murets intérieurs **54** étendant parallèlement à l'axe A1. Les murets **54** sont régulièrement répartis autour de la circonférence. Les murets **54** sont aussi appelés indifféremment goudrons ou nervures. Grâce à ces murets, l'interposition de la jupe entre la jante périphérique 2 et le palier intérieur du boîtier 1 se fait avec une contrainte radiale qui contribue à fournir un contact homogène tout autour de la circonférence et maîtrisée ainsi l'effet de frein à friction recherché.

### Figure 14.

Selon une variante de réalisation, le palier intérieur 1 n'est pas formé dans le carter plastique, mais est formé dans le couvercle **12** au moyen d'un muret circulaire ou 'soyage' repéré **120.** Le principe de friction de la jupe sur le palier intérieur est similaire ou identique à ce qui a été discuté plus haut. Il peut également y avoir des bossages sur le palier intérieur formé dans le couvercle pour obtenir l'effet d'ovalisation décrit plus haut.

### Réducteur

On a illustré dans l'exemple présenté aux figures un réducteur de type excentrique à joint de Oldham. Mais bien entendu un autre type de réducteur pourrait être logé à l'intérieur du boîtier de réducteur. Un tel réducteur est connu en soi. Il est décrit brièvement dans le présent document le lecteur peut se référer pour des compléments éventuels au document FR2991926.

Plus particulièrement, dans l'exemple du réducteur 8 illustré ici, la roue d'entrée 81 entraine, directement ou indirectement, une portion excentrique **82** reçue dans un alésage axial d'un **pignon orbital 83.** Ledit pignon orbital 8**3,** sous l'effet de la rotation de sa portion excentrique, voit son axe **A3** décrire un mouvement orbital d'un rayon équivalent à l'excentricité de la portion excentrique (cf Fig 8). Par ailleurs le pignon orbital comprend une zone dentée périphérique circulaire extérieure qui est engrainée en permanence, pour une partie de la denture, dans la denture radiale intérieure **36** de l'organe de sortie **3** déjà mentionnée et située radialement à l'extérieur du pignon orbital **83.**

De plus, le pignon orbital **83** comprend des pions saillants **89** dans le sens axial et reçus dans des gorges 88 d'une pièce de guidage appelée coulisseau **84** qui est détaillée ci-après.

Le coulisseau **84** est agencé pour ne pouvoir se déplacer qu'en translation sans mouvement de rotation autour de l'axe **A1** ; par conséquent, le pignon orbital **83** subit un déplacement autour de l'axe A1 sans pour autant tourner autour de l'axe **A1.** Par ailleurs, comme illustré à la figure 8, le nombre de dents extérieures du pignon orbital **83** est inférieur au nombre de dents de la denture radiale intérieure **36** de l'organe de sortie **3,** le mouvement orbital du pignon orbital **83** impartit une rotation à de l'organe de sortie **3.** Dans l'exemple illustré où l'écart entre le nombre de dents entre des deux secteurs dentés est de 1 dent, à chaque fois que la portion excentrique **82** tourne d'un tour, alors la denture radiale intérieure **36** de l'organe de sortie se décale d'une dent en rotation autour de l'axe **A1.**

Dans un exemple type, le pignon orbital comprend trente-cinq dents alors que la denture radiale intérieure **36** comprend trente-six dents, ce qui donne un rapport de réduction de 35 pour le réducteur 8.

Le coulisseau **84** comprend quatre bras **87** qui s'étendent dans un plan perpendiculaire à l'axe A1 et qui sont reçus dans des rainures **187** ménagées dans le carter plastique 11 pour autoriser un mouvement de translation selon la direction **W** perpendiculaire à l'axe A1 et empêcher toute rotation du coulisseau **84** autour de l'axe **A1.** En outre, le coulisseau comprend les gorges **88** s'étendant selon la direction **V** perpendiculaire à la direction **W** et à la direction axiale **A,** les deux pions saillants **89** diamétralement opposés venant d'engager dans les gorges **88.**

Ainsi le pignon orbital **83** peut se translater selon une direction **V** à l'intérieur du coulisseau, mais sans rotation autour de A1 ; le coulisseau **84** peut se translater quant à lui par rapport à l'axe **W** dans l'embase mais à nouveau sans rotation autour de **A1.** Cet assemblage est aussi connu sous le nom de joint de `oldham'. En effet, ces deux translations permettent de compenser le mouvement orbital créé par la portion excentrique pour que le mouvement de l'organe de sortie **3** soit exactement coaxial avec le mouvement de rotation d'entrée de la roue d'entrée **81.**

Le coulisseau **84** est reçu dans une embase formée dans le carter plastique 11. Le coulisseau est réalisé en métal, il est sécurisé généralement à l'intérieur du carter **11** au moyen de quatre tenons **17** qui viennent s'insérer entre les bras 87 du coulisseau.

Par ailleurs, les vis de fixation **19** viennent encadrer par l'extérieur des bras du Coulisseau. Les vis de fixation **19** permettent d'assembler le couvercle **12** sur le carter plastique **11** et de former ainsi le boîtier d'actionneur 10 fermé.

### Autres points

On remarque que le couple de freinage est sensiblement constant sur un tour de pignon de sortie.

On note que le dispositif d'entrainement motorisé pourrait être utilisé pour motoriser un mouvement de réglage de siège autre que la rehausse d'assise.

Au lieu d'utiliser un moteur sur un axe orthogonal au pignon de sortie, on pourrait utiliser un moteur dans le même axe.

De même au lieu d'utiliser un réducteur excentrique à joint de Oldham, on pourrait utiliser un réducteur planétaire.

Selon une possibilité, le palier intérieur peut présenter une surface discontinue et/ou avec des saillies, en vis-à-vis d'une surface de jupe lisse, comme ceci est illustré la figure13.

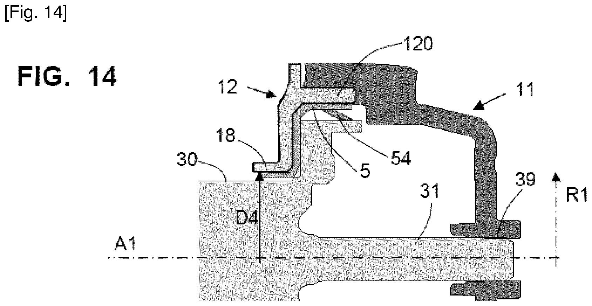

Selon une possibilité, le palier intérieur peut présenter une surface continue vis-à-vis d'une surface de jupe avec des saillies radiales comme ceci est illustré la figure 14.

## Revendications

1. Dispositif d'entrainement motorisé pour siège de véhicule ayant une armature d'assise, le dispositif d'entrainement étant destiné à entraîner le déplacement d'un élément mobile relié à l'armature d'assise, notamment pour un mouvement de rehausse d'assise, le dispositif comprenant :
- un actionneur (13) et un boîtier d'actionneur (10) contenant au moins un réducteur (8),
- un organe de sortie (3), monté à rotation autour d'un axe (A1), l'organe de sortie comprenant une jante périphérique (2),
- une bague de friction (4) montée autour de l'organe de sortie et solidaire en rotation de l'organe de sortie, caractérisé en ce la bague de friction comprend une jupe (5),
- le boîtier d'actionneur comprend un palier intérieur (1) pour recevoir la jupe, et
- la jupe est en contact avec au moins le palier intérieur pour former un frein à friction entre l'organe de sortie formant pièce tournante et le palier intérieur formant pièce fixe.

2. Dispositif d'entrainement selon la revendication 1, dans lequel la jupe est généralement circulaire de révolution au repos, et est ovalisée sous contrainte une fois assemblée à l'intérieur du palier intérieur.

3. Dispositif d'entrainement selon l'une des revendications 1 à 2, dans lequel le palier intérieur est muni d'une pluralité de projections radiales intérieures (1a) faisant saillie radialement vers l'intérieur.

4. Dispositif d'entrainement selon la revendication 3, dans lequel il est prévu un premier groupe (G1) de projections radiales intérieures et un deuxième groupe (G2) de projections radiales intérieures, les deux groupes étant diamétralement opposés.

5. Dispositif d'entrainement selon l'une des revendications 1 à 4, dans lequel la bague de friction (4) est formée comme une seule pièce moulée en matière plastique élastique.

6. Dispositif d'entrainement selon l'une des revendications 1 à 5, dans lequel la jupe présente un diamètre extérieur (D5) au repos d'au moins 35 mm, et de préférence au moins 40 millimètres.

7. Dispositif d'entrainement selon l'une des revendications 1 à 6, dans lequel la jupe prend appui en outre, du côté radialement intérieur, sur la jante périphérique de l'organe de sortie

8. Dispositif d'entrainement selon la revendication 7, dans lequel il est prévu des godrons/nervures (54) dirigés vers l'intérieur pour venir contacter la jante.

9. Dispositif d'entrainement selon l'une des revendications 1 à 8, dans lequel le boîtier d'actionneur comprend un carter (11) en plastique ou en alliage léger et un couvercle métallique (12), et le palier intérieur, avec le cas échéant les projections radiales intérieures, est réalisé dans le carter.

10. Dispositif d'entrainement selon l'une des revendications 1 à 8, dans lequel le boîtier d'actionneur comprend un carter (11) en plastique ou en alliage léger et un couvercle métallique (12), et le palier intérieur, avec le cas échéant les projections radiales intérieures, est réalisé dans le couvercle métallique.

11. Dispositif d'entrainement selon l'une des revendications 1 à 10, dans lequel la bague de friction comprend un col (51) de forme intérieure généralement complémentaire avec une denture (30) du pignon de sortie.

12. Dispositif d'entrainement selon l'une des revendications 1 à 11, dans la bague de friction comprend un plateau ajouré (52).

13. Dispositif d'entrainement selon l'une des revendications 1 à 12, dans lequel le réducteur est de type hypocycloïde à joint de oldham.

14. Dispositif d'entrainement selon l'une des revendications 1 à 12, dans lequel les projections radiales intérieures circonscrivent un premier cercle primitif (C1), et la jupe au repos est circonscrite dans un deuxième cercle primitif (C2), le diamètre de (C2) étant supérieur au diamètre de (C1).

15. Dispositif d'entrainement selon l'une des revendications 1 à 14, dans lequel la jupe comprend une succession de segments (56) formant sensiblement des cordes, les dits segments adjacents deux à deux étant reliés entre eux par des jonctions coudées (57), le sommet (57a) des jonctions coudées étant en contact avec le palier intérieur (1).

16. Dispositif d'entrainement selon l'une des revendications 1 à 14, dans lequel la jupe (5) comprend des vagues ou ondulations, qui au repos ont une dimension radiale supérieure à un intervalle radial **(E1)** disponible entre la jante périphérique (2) et le palier intérieur (1), lesdites vagues ou ondulations étant comprimées dans le sens radial une fois la jupe insérée entre la jante périphérique **(2)** et le palier intérieur (1).

17. Siège pour véhicule automobile comprenant un dispositif d'entrainement selon l'une des revendications 1 à 16.

## Patentansprüche

1. Motorisierte Antriebsvorrichtung für einen Fahrzeugsitz mit einem Sitzrahmen, wobei die Antriebsvorrichtung dazu bestimmt ist, die Verschiebung eines beweglichen Elements anzutreiben, das mit dem Sitzrahmen verbunden ist, insbesondere für eine Sitzerhöhungsbewegung, wobei die Vorrichtung umfasst:
- einen Aktuator (13) und ein Aktuatorgehäuse (10), das mindestens ein Untersetzungsgetriebe (8) enthält,
- ein Abtriebselement (3), das um eine Achse (A1) drehbar gelagert ist, wobei das Abtriebselement einen Umfangskranz (2) umfasst,
- einen Reibring (4), der um das Abtriebselement herum montiert und drehfest mit dem Abtriebselement verbunden ist, **dadurch gekennzeichnet, dass** der Reibring eine Schürze (5) umfasst,
- wobei das Aktuatorgehäuse ein Innenlager (1) zum Aufnehmen der Schürze umfasst und
- wobei die Schürze mit mindestens dem Innenlager in Kontakt ist, um eine Reibungsbremse zwischen dem Abtriebselement, das ein rotierendes Stück bildet, und dem Innenlager, das ein feststehendes Stück bildet, zu bilden.

2. Antriebsvorrichtung nach Anspruch 1, wobei die Schürze im Ruhezustand im Allgemeinen drehkreisförmig ist und unter Spannung unrund gemacht wird, sobald sie im Inneren des Innenlagers zusammengebaut ist.

3. Antriebsvorrichtung nach einem der Ansprüche 1 bis 2, wobei das Innenlager mit einer Vielzahl von radial nach innen vorstehenden inneren radialen Vorsprüngen (1a) versehen ist.

4. Antriebsvorrichtung nach Anspruch 3, wobei eine erste Gruppe (G1) von inneren radialen Vorsprüngen und eine zweite Gruppe (G2) von inneren radialen Vorsprüngen vorgesehen sind, wobei die beiden Gruppen einander diametral gegenüberliegen.

5. Antriebsvorrichtung nach einem der Ansprüche 1 bis 4, wobei der Reibring (4) als ein einstückiges Formteil aus elastischem Kunststoffmaterial ausgebildet ist.

6. Antriebsvorrichtung nach einem der Ansprüche 1 bis 5, wobei die Schürze einen Außendurchmesser (D5) im Ruhezustand von mindestens 35 mm, bevorzugt mindestens 40 Millimeter, aufweist.

7. Antriebsvorrichtung nach einem der Ansprüche 1 bis 6, wobei sich die Schürze zusätzlich auf der radial inneren Seite auf dem Umfangskranz des Abtriebselements abstützt

8. Antriebsvorrichtung nach Anspruch 7, wobei nach innen gerichtete Ansätze/Rippen (54) vorgesehen sind, um mit dem Kranz in Kontakt zu kommen.

9. Antriebsvorrichtung nach einem der Ansprüche 1 bis 8, wobei das Aktuatorgehäuse ein Gehäuse (11) aus Kunststoff oder aus einer Leichtmetalllegierung und einen Metalldeckel (12) umfasst und das Innenlager, gegebenenfalls mit den inneren radialen Vorsprüngen, in dem Gehäuse ausgeführt sind.

10. Antriebsvorrichtung nach einem der Ansprüche 1 bis 8, wobei das Aktuatorgehäuse ein Gehäuse (11) aus Kunststoff oder aus einer Leichtmetalllegierung und einen Metalldeckel (12) umfasst und das Innenlager, gegebenenfalls mit den inneren radialen Vorsprüngen, in dem Metalldeckel ausgeführt sein kann.

11. Antriebsvorrichtung nach einem der Ansprüche 1 bis 10, wobei der Reibring einen Innenformkragen (51) umfasst, die im Allgemeinen komplementär zu einer Zahnung (30) des Abtriebsritzels ist.

12. Antriebsvorrichtung nach einem der Ansprüche 1 bis 11, wobei der Reibring eine durchbrochene Platte (52) umfasst.

13. Antriebsvorrichtung nach einem der Ansprüche 1 bis 12, wobei das Untersetzungsgetriebe ein hypozykloides Oldham-Gelenk ist.

14. Antriebsvorrichtung nach einem der Ansprüche 1 bis 12, wobei die inneren radialen Vorsprünge einen ersten Wälzkreis (C1) eingrenzen und die Schürze im Ruhezustand in einem zweiten Wälzkreis (C2) eingegrenzt ist, wobei der Durchmesser von (C2) größer als der Durchmesser von (C1) ist.

15. Antriebsvorrichtung nach einem der Ansprüche 1 bis 14, wobei die Schürze eine Folge von Segmenten (56) umfasst, die im Wesentlichen Schnüre bilden, wobei die paarweise aneinandergrenzenden Segmente durch abgewinkelte Verbindungen (57) miteinander verbunden sind, wobei die Spitze (57a) der abgewinkelten Verbindungen in Kontakt mit dem Innenlager (1) ist.

16. Antriebsvorrichtung nach einem der Ansprüche 1 bis 14, wobei die Schürze (5) Wellen oder Riffel umfasst, die im Ruhezustand eine radiale Abmessung aufweisen, die größer als ein radiales Intervall **(E1)** zwischen dem Umfangskranz (2) und dem Innenlager (1) ist, wobei die Wellen oder die Riffel in radialer Richtung zusammengedrückt werden, sobald die Schürze zwischen dem Umfangskranz **(2)** und dem Innenlager (1) eingeführt ist.

17. Sitz für ein Kraftfahrzeug, umfassend eine Antriebsvorrichtung nach einem der Ansprüche 1 bis 16.

## Claims

1. A motorized drive device for a vehicle seat having a squab frame, the drive device being intended to drive the displacement of a movable element connected to the squab frame, in particular for a seat raising movement, the device comprising:
- an actuator (13) and an actuator housing (10) containing at least one reduction gear (8),
- an output member (3), mounted to rotate about an axis (A1), the output member comprising a peripheral rim (2),
- a friction ring (4) mounted around the output member and rotationally integral with the output member, **characterized in that** the friction ring comprises a skirt (5),
- the actuator housing comprises an inner bearing (1) for receiving the skirt, and
- the skirt is in contact with at least the inner bearing in order to form a friction brake between the output member forming a rotating part and the inner bearing forming a fixed part.

2. The drive device according to claim 1, wherein the skirt generally has rotational symmetry at rest, and is oval-shaped under stress once assembled inside the inner bearing.

3. The drive device according to one of claims 1 to 2, wherein the inner bearing is provided with a plurality of inner radial protrusions (1a) protruding radially inwards.

4. The drive device according to claim 3, wherein a first group (G1) of inner radial protrusions and a second group (G2) of inner radial protrusions are provided, the two groups being diametrically opposed.

5. The drive device according to one of claims 1 to 4, wherein the friction ring (4) is formed as a single molded part made of resilient plastic material.

6. The drive device according to one of claims 1 to 5, wherein the skirt has an outer diameter (D5) at rest of at least 35 mm, and preferably at least 40 millimeters.

7. The drive device according to one of claims 1 to 6, wherein the skirt also bears, on the radially inner side, on the peripheral rim of the output member

8. The drive device according to claim 7, wherein notches/ribs (54) directed inwards to contact the rim are provided.

9. The drive device according to one of claims 1 to 8, wherein the actuator housing comprises a casing (11) made of plastic or of light alloy and a metal cover (12), and the inner bearing, with the inner radial protrusions where appropriate, is formed in the casing.

10. The drive device according to one of claims 1 to 8, wherein the actuator housing comprises a casing (11) made of plastic or of light alloy and a metal cover (12), and the inner bearing, with the inner radial protrusions where appropriate, is formed in the metal cover.

11. The drive device according to one of claims 1 to 10, wherein the friction ring comprises a neck (51) of inner shape generally complementary to a toothing (30) of the output pinion.

12. The drive device according to claims 1 to 11, in the friction ring comprises a perforated plate (52).

13. The drive device according to claims 1 to 12, wherein the reduction gear is of the hypocycloid type with an Oldham coupling.

14. The drive device according to one of claims 1 to 12, wherein the inner radial protrusions circumscribing a first pitch circle (C1), and the skirt at rest is circumscribed in a second pitch circle (C2), the diameter of (C2) being greater than the diameter of (C1).

15. The drive device according to one of claims 1 to 14, wherein the skirt comprises a succession of segments (56) substantially forming ropes, said adjacent segments two by two being connected together by bent junctions (57), the vertex (57a) of the bent junctions being in contact with the inner bearing (1).

16. The drive device according to one of claims 1 to 14, wherein the skirt (5) comprises waves or corrugations which at rest have a radial dimension greater than a radial interval (E1) available between the peripheral rim (2) and the inner bearing (1), said waves or corrugations being compressed in the radial direction once the skirt is inserted between the peripheral rim (2) and the inner bearing (1).

17. A seat for a motor vehicle comprising a drive device according to one of claims 1 to 16.
